# EUROPÄISCHE PATENTSCHRIFT

(11) **EP 2 744 014 B1**
(45) Veröffentlichungstag und Bekanntmachung des Hinweises auf die Patenterteilung: **29.07.2015**
(21) Anmeldenummer: 12196778.0
(22) Anmeldetag: 12.12.2012
(51) Int. Cl.: H01M 2/10, H01M 2/20, H01M 2/22, H01M 10/48

(54) **Batteriesystem und Verfahren zur Herstellung eines Batteriesystems**
Battery system and method for producing a battery system
Système de batterie et procédé de fabrication d'un système de batterie

(43) Veröffentlichungstag der Anmeldung: 18.06.2014
(73) Patentinhaber: MAGNA STEYR Battery Systems GmbH & Co OG, 8041 Graz (AT)
(72) Erfinder: Fister, Kevin, 8020 Graz (AT); Kropsch, Thomas, 8700 Leoben (AT)
(74) Vertreter: Gulde & Partner

(56) Entgegenhaltungen:
- WO-A1-2010/071292
- DE-A1-102009 041 738
- US-A1- 2002 022 178
- US-A1- 2003 152 826
- US-A1- 2005 110 458
- US-A1- 2006 145 657
- US-A1- 2011 097 620

## Beschreibung

### Gebiet der Erfindung

Die vorliegende Erfindung betrifft ein Batteriesystem umfassend mehrere Batteriezellen, eine Abdeckplatte zur Abdeckung der Batteriezellen, und Zellverbinder zur elektrischen Verbindung der Batteriezellen, wobei die Zellverbinder in Aufnahmebereichen der Abdeckplatte angeordnet sind. Die Erfindung betrifft auch ein Verfahren zur Herstellung eines solchen Batteriesystems.

### Stand der Technik

Zur beispielsweise parallelen oder seriellen Verbindung von Batteriezellen eines Batteriesystems mit mehreren Zellen, das heißt insbesondere von Hochvoltbatterien, ist es bekannt, Zellverbinder einzusetzen. Die Zellverbinder müssen mit geeigneten Ansschlusspunkten, üblicherweise den Zellpolen, von jeweils zumindest zwei Batteriezellen elektrisch leitend verbunden sein. Meist werden die Zellverbinder mit den Zellpolen verschraubt.

Die DE 19847190 A1 offenbart zum Verbinden einer Vielzahl von Batterien die Verwendung einer gespritzten Harzplatte mit eingegossenen Stromschienen. Die Stromschienen stellen jeweils eine Verbindung zu zwei Batterien dar. Über Schrauben werden die Stromschienen mit Elektroden der Batterien verbunden.

Aus der US 2011/097620 A1 ist ein Batteriepack bekannt, umfassend eine Vielzahl von Batterieeinheiten, mindestens eine Sammelschiene zum elektrischen Verbinden von Elektrodenklemmen der Batterieeinheiten und einen Sammelschienenhalter.

Aus der DE 10 2010 035 114 A1 ist eine Batterieeinheit bekannt, mit benachbarten Zelleneinheiten, wobei jede Zelleneinheit eine Mehrzahl von Akkumulatorzellen umfasst, und wobei Elektroden der Zelleneinheiten über Bus-Bars verbunden sind. Auf einem oberen Gehäuseteil sind Bus-Bar-Ausstattungsräume ausgebildet, mit Öffnungen für Kathodenanschlüsse und Anodenanschlüsse. Bus-Bars sind in den Bus-Bar-Ausstattungsräumen vorgesehen und mit den Elektrodenanschlüssen der Zellen verbunden, insbesondere verschweißt.

Schraubverbindungen bringen eine Reihe von Nachteilen mit sich. So kann beispielsweise im Lauf der Zeit die Spannkraft der Schraubverbindungen nachlassen, was zu einem erhöhten Übergangswiderstand zwischen Zellen und Zellverbindern und somit zu erhöhtem Widerstand und erhöhter Temperatur führt. Auch erhöhen sich durch die Verwendung von Schrauben mit einem Schraubenkopf die Außenabmessungen des Batteriesystems. Zudem ist die Herstellung derartiger Batteriesystem problematisch, da die Schraubenköpfe für ein Verschraubungswerkzeug gut zugänglich sein müssen.

Lösungen mit nicht-verschraubten Zellverbindern sind üblicherweise in Massenfertigung nicht effizient und/oder nicht prozesssicher herzustellen. So ist beispielsweise das Hantieren mit einer Vielzahl von lediglich auf einer Abdeckplatte aufgelegten Zellverbindern schwierig.

### Zusammenfassung der Erfindung

Es ist eine Aufgabe der Erfindung, ein Batteriesystem anzugeben mit mehreren Batteriezellen, einer Abdeckplatte zur Abdeckung der Batteriezellen, und Zellverbindern zur elektrischen Verbindung der Batteriezellen, dass bei kompakten Abmessungen einfach und sicher herzustellen ist, sowie ein Verfahren zur Herstellung eines solchen Batteriesystems.

Die Lösung der Aufgabe erfolgt durch ein Batteriesystem umfassend mehrere Batteriezellen, eine Abdeckplatte zur Abdeckung der Batteriezellen, und Zellverbinder zur elektrischen Verbindung der Batteriezellen, wobei die Zellverbinder in Aufnahmebereichen der Abdeckplatte angeordnet sind, wobei die Abdeckplatte in den Aufnahmebereichen jeweils eine erste Haltefläche, als einen ersten flachen Abschnitt der Abdeckplatte auf der den Batteriezellen zugewandten ersten Seite der Abdeckplatte ausbildet und eine zweite Haltefläche, als einen zweiten flachen Abschnitt der Abdeckplatte auf der den Batteriezellen abgewandten zweiten Seite der Abdeckplatte ausbildet und die Zellverbinder jeweils zwischen der ersten Haltefläche und der zweiten Haltefläche gehalten sind, mit Merkmalen gemäß Anspruch 1.

Die Aufgabe wird auch gelöst durch ein Verfahren zur Herstellung eines derartigen Batteriesystems, wobei die Zellverbinder zwischen den ersten und zweiten Halteflächen der Abdeckplatte eingelegt werden, danach die Halteplatte auf die Batteriezellen aufgelegt wird und danach die Zellverbinder mit Polen der Batteriezellen verschweißt werden.

Erfindungsgemäß bildet die Abdeckplatte Aufnahmeräume aus, die sowohl zu den Batteriezellen hin als auch in der entgegengesetzten Richtung, üblicherweise nach außerhalb des Batteriesystems, von Halteflächen begrenzt sind, so dass Zellverbinder in den Aufnahmebereichen der Abdeckplatte angeordnet und durch die Halteflächen in deren Position festgelegt sein können. Unter "Haltefläche" wird erfindungsgemäß ein flächiger, jedoch dreidimensionaler Abschnitt der Abdeckplatte verstanden, nicht bloß die zweidimensionale Oberfläche des entsprechenden Abschnitts. Durch die Ausbildung mit Halteflächen kann eine erfindungsgemäße Abdeckplatte bereits vor der Montage auf Batteriezellen mit Zellverbindern bestückt werden. Die Zellverbinder sind ohne zusätzliche Positioniervorrichtungen auch während der Herstellung des Batteriesystems in deren Lage gehalten. Die korrekte Lage der Zellverbinder und eventuell angeschlossener Leitungen kann beispielsweise vor der Montage der Abdeckplatte auf Batteriezellen überprüft werden und erforderlichenfalls korrigiert werden.

Für einen sicheren Halt der Zellverbinder müssen beide Halteflächen eine ausreichend große Fläche des jeweiligen Aufnahmebereichs abdecken, um die Zellverbinder, beispielsweise bei Drehung der Abdeckplatte, vor einem Herausfallen zu sichern. Bevorzugt bedeckt jede Haltefläche mehr als 3 %, mehr als 5 %, mehr als 10 %, mehr als 20 % oder mehr als 30 % der Fläche ihres Aufnahmebereiches.

Erfindungsgemäß werden die ersten Halteflächen durch jeweils einen ersten Fortsatz und einen, dem ersten Fortsatz gegenüberliegenden, zweiten Fortsatz gebildet, sodass die Zellverbinder, auf der den Batteriezellen zugewandten ersten Seite der Abdeckplatte, an Rändern der Zellverbinder von den ersten und zweiten Fortsätzen zu den Batteriezellen hin gehalten werden und in der Mitte der Zellverbinder mit Polen der Batteriezellen elektrisch verbindbar sind. Dadurch dass seitlich liegende Fortsätze die erste, den Batteriezellen zugewandten Haltefläche bilden, kann mittig beispielsweise eine Verschweißung der Zellverbinder mit Polen der Batteriezellen erfolgen. Das Wort "seitlich" wird im Rahmen dieser Schrift immer so verstanden, dass es sich auf die Schmalseiten der Abdeckplatte bezieht, also auf Seiten die normal auf die den Batteriezellen zugewandte erste Seite und die den Batteriezellen abgewandte zweite Seite der Abdeckplatte liegen.

Die ersten Fortsätze sind kürzer als die zweiten Fortsätze, die beiden Fortsätze sind also nicht gleich lang ausgeführt. Hierdurch wird eine leichtere Einbringung und Entnahme eines Zellverbinders auf Seiten des Kürzeren Fortsatzes ermöglicht und ein besserer Halt des Zellverbinders durch den längeren Fortsatz.

Die Aufnahmebereiche sind in zumindest zwei Reihen nebeneinander angeordnet. Dieser Aufbau ist vorteilhaft für eine übliche Aneinanderreihung von insbesondere gleichartigen Batteriezellen, deren positive und negative Pole hintereinander zu liegen kommen, also Reihen bilden.

Erfindungsgemäß sind die ersten und zweiten Fortsätze in einer ersten Reihe von Aufnahmebereichen spiegelverkehrt zu den ersten und zweiten Fortsätzen in einer der ersten Reihe benachbarten zweiten Reihe von Aufnahmebereichen angeordnet. Die Spiegelsymmetrie bezieht sich dabei auf eine Normalebene auf eine Verbindungsgerade zwischen einem Aufnahmebereich der ersten Reihe und einem Aufnahmebereich der zweiten Reihe. Beispielsweise ist der linke Fortsatz einer links im Batteriesystem liegenden Reihe von Aufnahmebereichen kürzer als der rechts liegende Fortsatz der selben Aufnahmebereiche und der linke Fortsatz einer rechts im Batteriesystem liegenden Reihe von Aufnahmebereichen länger als der Rechts liegende Fortsatz der selben Aufnahmebereiche. Hierdurch wird bewirkt, dass das Einsetzen und Lösen von Zellverbindern in die Abdeckplatte, jeweils über die Seite des kürzeren Fortsatzes, relativ mühelos möglich ist, solange die Abdeckplatte nicht mit den Batteriezellen verbunden ist. Sobald beispielsweise die Zellverbinder mit den Polen der Batteriezellen verschweißt sind, können weder die Zellverbinder aus der Abdeckplatte noch die Abdeckplatte von den Batteriezellen zerstörungsfrei gelöst werden, da ein Herausdrehen der Abdeckplatte über die kurzen Fortsätze der ersten Haltefläche aufgrund der Geometrie nicht möglich ist.

Weiterbildungen der Erfindung sind in den abhängigen Ansprüchen, der Beschreibung sowie den beigefügten Zeichnungen angegeben.

Bevorzugt weisen die zweiten Halteflächen jeweils eine Montageöffnung auf, so dass die Zellverbinder durch die Montageöffnungen von außen zugänglich sind. Durch diese Montageöffnung kann insbesondere ein Zellverbinder mit einem Zellpol verschweißt werden.

Gemäß einer Ausführungsform sind die zweiten Halteflächen jeweils über ein Scharnier wegklappbar. Hierdurch ist es bei weggeklappter zweiter Haltefläche besonders einfach einen Zellverbinder in den Aufnahmebereich einzulegen. Für das Schließen einer zugeklappten zweiten Haltefläche kann beispielsweise ein Clip-Kontakt vorgesehen sein.

Gemäß einer Ausführungsform der Erfindung ist an einer Stirnseite der Abdeckplatte zumindest eine Einschuböffnung zum seitlichen Einführen zumindest eines Zellverbinders vorgesehen. Hierdurch ist alternativ oder zusätzlich zu weiteren Möglichkeiten des Einbringens von Zellverbindern möglich, Zellverbinder seitlich in die Aufnahmebereiche der Halteplatte einzuschieben.

Besonders bevorzugt ist zumindest eine Einschuböffnung zum Einführen eines Zellverbinders normal auf eine der Reihen von Aufnahmebereichen angeordnet und/oder zumindest eine Einschuböffnung zum Einführen eines Zellverbinders in Richtung einer Reihe von Aufnahmebereichen angeordnet. Das Einführen von Zellverbindern kann also beispielsweise in Richtung der Reihen von Aufnahmebereichen erfolgen, so dass eine ganze Reihe von Zellverbindern, bevorzugt mitsamt elektrisch nichtleitenden Trennelementen, gemeinsam in die Aufnahmebereiche eingeschoben werden kann. Alternativ oder zusätzlich können Zellverbinder auch normal auf eine Reihe von Aufnahmebereichen eingeschoben werden. Dabei sind Trennelemente zwischen den Aufnahmebereichen bevorzugt bereits ausgebildet, insbesondere von der Abdeckplatte.

Bevorzugt umfasst ein erfindungsgemäßes Batteriesystem auch eine Spannungsabgriffeinheit mit Messleitungen, wobei die Messleitungen lösbar, insbesondere über Klemmverbindungen, mit den Zellverbindern verbunden sind.

Besonders bevorzugt weisen die Enden der Messleitungen Kontaktflächen auf und die Kontaktflächen sind jeweils zwischen einer Haltefläche und dem Zellverbinder geklemmt. Messleitungen einer Einheit zum Abgriff von Spannungen, beispielsweise einer Zellüberwachungseinheit, können auf diese Weise bereits vor der Montage der Abdeckplatte auf die Batteriezellen in den jeweils zugeordneten Aufnahmebereichen vorpositioniert werden. Hierzu wird eine der Halteflächen, bevorzugt die erste Haltefläche genutzt, um eine Kontaktfläche der Messleitung einzuklemmen.

Bevorzugt sind bei einem Batteriesystem mit einer Spannungsabgriffeinheit mit Messleitungen die Messleitungen lösbar an der Abdeckplatte festgelegt, insbesondere über an der Abdeckplatte ausgebildete Halteelemente. Hierdurch sind die Messleitungen, beispielsweise zusätzlich zur Klemmung von Kontaktflächen in den Aufnahmebereichen, durch Halteelemente an der Abdeckplatte festgelegt.

Zur Herstellung eines erfindungsgemäßen Batteriesystems werden bevorzugt die Zellverbinder zwischen den ersten und zweiten Halteflächen der Abdeckplatte eingelegt, danach wird die Abdeckplatte auf die Batteriezellen aufgelegt und danach die Zellverbinder mit Polen der Batteriezellen verschweißt.

Besonders bevorzugt werden Messleitungen, falls vorhanden, vor dem Einlegen der Zellverbinder an der Abdeckplatte festgelegt. Die bereits mit Messleitungen und Zellverbindern vorbestückte Abdeckplatte wird auf die Batteriezellen aufgelegt und danach die Zellverbinder mit Polen der Batteriezellen verschweißt.

### Kurzbeschreibung der Zeichnungen

Die Erfindung wird im Folgenden beispielhaft unter Bezugnahme auf die Zeichnungen beschrieben.
- Fig. 1: ist eine schematische Darstellung eines erfindungsgemäßen Batteriesystems von vorne.
- Fig. 2: ist eine dreidimensionale schematische Darstellung eines erfindungsgemäßen Batteriesystems.
- Fig. 3: ist eine schematische Darstellung eines weiteren erfindungsgemäßen Batteriesystems von vorne.
- Fig. 4: ist eine schematische Darstellung eines weiteren erfindungsgemäßen Batteriesystems von vorne.
- Fig. 5: ist eine schematische Darstellung eines weiteren erfindungsgemäßen Batteriesystems von vorne.

### Detaillierte Beschreibung der Erfindung

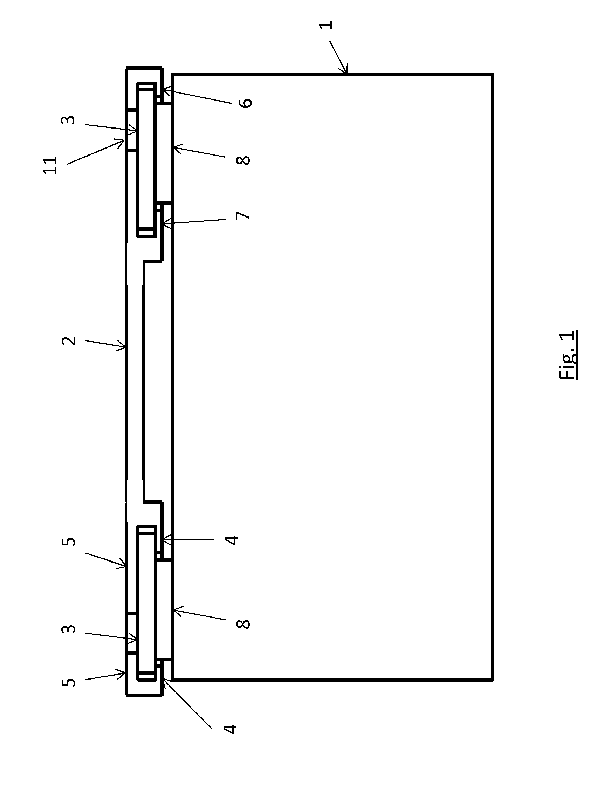

In Fig. 1 ist ein erfindungsgemäßes Batteriesystem dargestellt, mit mehreren Batteriezellen 1, wovon nur eine erste Batteriezelle 1 sichtbar ist, mit einer Abdeckplatte 2 zur Abdeckung der Batteriezellen 1, und mit Zellverbindern 3, die elektrisch mit Polen 8 der Batteriezellen 1 verbunden sind, beispielsweise verschweißt. Die Zellverbinder 3 sind in Aufnahmebereichen der Abdeckplatte 2 angeordnet, die jeweils von einer ersten Haltefläche 4 auf der den Batteriezellen 1 zugewandten ersten Seite der Abdeckplatte 2 und von einer zweiten Haltefläche 5 auf der den Batteriezellen 1 abgewandten zweiten Seite der Abdeckplatte 2 begrenzt sind. Die Zellverbinder 3 sind jeweils zwischen der ersten Haltefläche 4 und der zweiten Haltefläche 5 gehalten. Die erste Haltefläche 4 wird durch zwei seitliche Fortsätze 6 und 7 gebildet, wovon der erste Fortsatz 6 kürzer ausgebildet ist, als der zweite Fortsatz 7 an der gegenüberliegenden Seite des Aufnahmebereiches. Entsprechende Aufnahmebereiche sind in der Fig. 1 über einem links dargestellten Pol 8 und einem rechts dargestellten Pol 8 ausgebildet, wobei die entsprechenden Bezugszeichen der Übersichtlichkeit halber jeweils nur an einer Seite der Darstellung angegeben sind. Die Fortsätze 6, 7 der, einer linken Reihe von Aufnahmebereichen zuzuordnenden ersten Haltefläche 4 sind gegenüber den Fortsätzen 6, 7 der, einer rechten Reihe von Aufnahmebereichen zuzuordnenden ersten Haltefläche 4 spiegelverkehrt angeordnet, so dass sich der kürzere erste Fortsatz 6 in der linken Reihe links und in der rechten Reihe rechts vom jeweiligen Pol 8 befindet. Die zweiten Halteflächen 5 weisen Montageöffnungen 11 auf, durch welche es möglich ist beispielsweise mit einer Schweißvorrichtung die Zellverbinder 3 mit den Polen 8 zu verbinden.

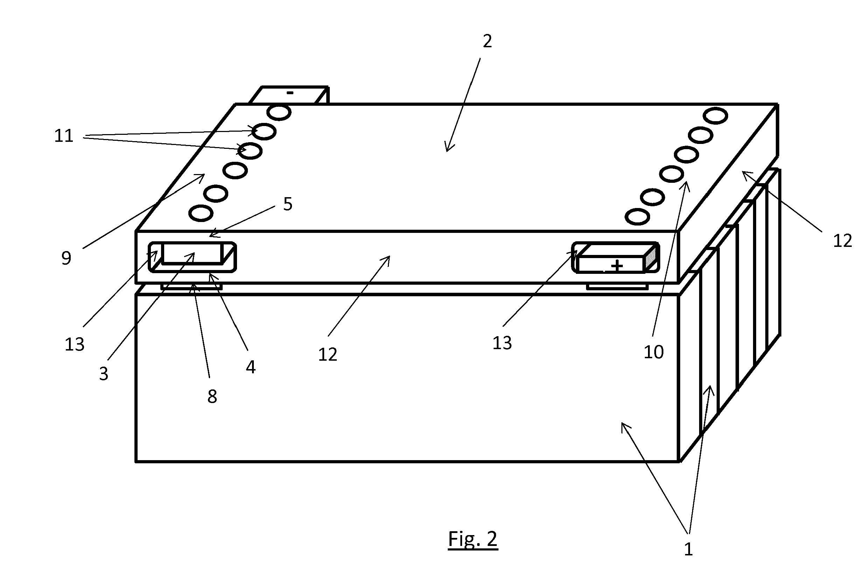

In Fig. 2 ist gut zu erkennen, wie die Aufnahmebereiche die einem jeweils links dargestellten Pol 8 zugeordnet sind eine erste Reihe 9 bilden und die Aufnahmebereiche die einem jeweils rechts dargestellten Pol 8 zugeordnet sind eine zweite Reihe 10 bilden. Die Abdeckplatte 2 bildet an einer der Stirnseiten 12 Einschuböffnungen 13 aus. Zellverbinder 3 können, beispielsweise jeweils abwechselnd mit nichtelektrischen Trennelementen, in Richtung der ersten und zweiten Reihe 9, 10 von Aufnahmebereichen eingeführt werden, und werden von den ersten Halteflächen 4 und zweiten Halteflächen 5 in ihrer Position gehalten.

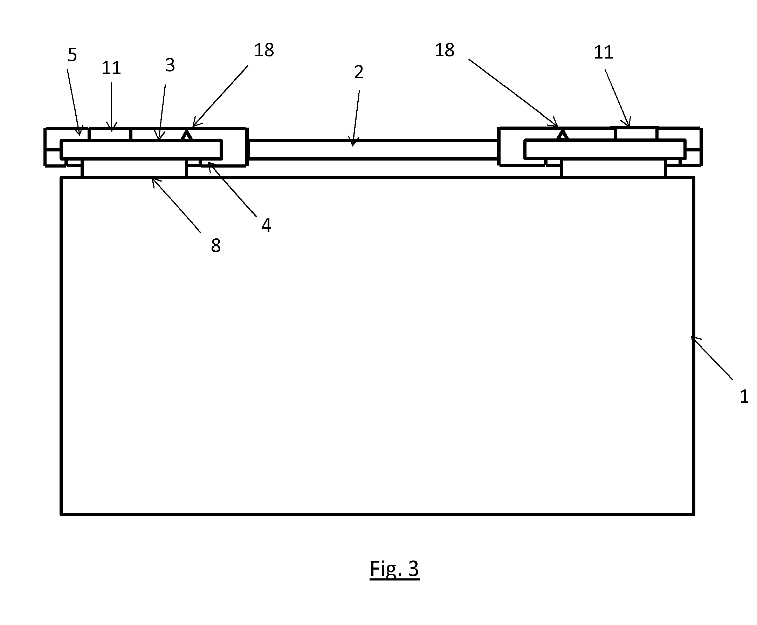

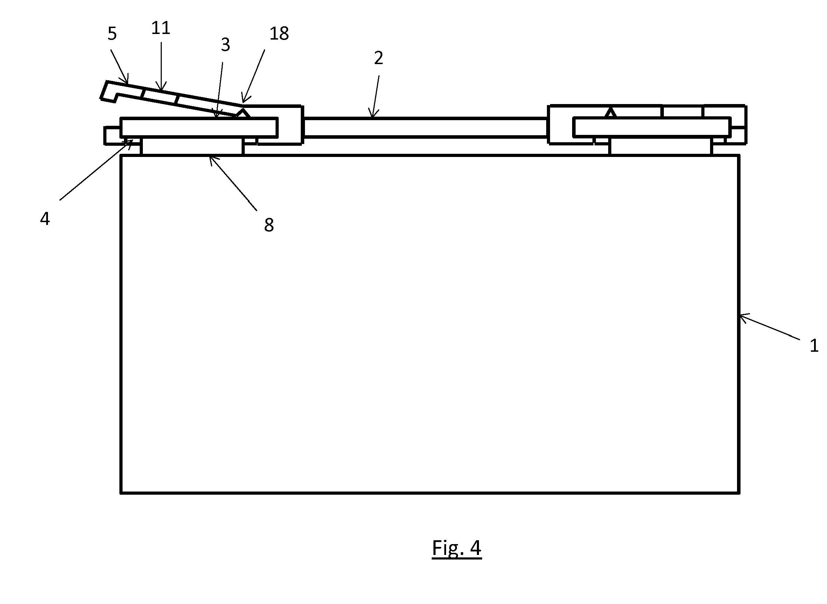

Wie in Fig. 3 und Fig. 4 dargestellt, können insbesondere die zweiten Halteflächen 5 mit einem Scharnier 18 ausgestattet sein, so dass sie hochklappbar sind und ein besonders einfaches Einlegen von Zellverbindern 3 erlauben. Für das Schließen der zweiten Halteflächen 5 kann ein nicht dargestellter Einrastmechanismus verwendet werden.

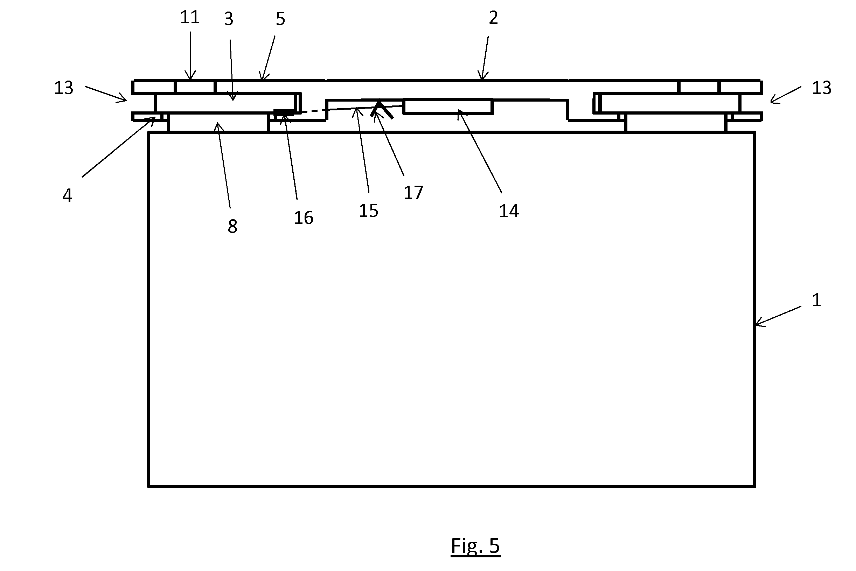

An der Abdeckplatte 2 kann eine Spannungsabgriffeinheit 14 angeordnet sein, wie in Fig. 5 dargestellt. Die Spannungsabgriffeinheit 14 kann über Messleitungen 15, deren den Zellen zugeordnete Enden Kontaktflächen 16 ausbilden, mit den Polen 8 der Batteriezellen 1 elektrisch leitend verbunden sein. Dazu können die Kontaktflächen 16 jeweils zwischen einer ersten Haltefläche 4 und einem Zellverbinder 3 eingeklemmt sein. Die Messleitungen 15 können zusätzlich über Halteelemente 17 an der Abdeckplatte 2 befestigt sein.

Zur Herstellung eines erfindungsgemäßen Batteriesystems werden Messleitungen 15 einer Spannungsabgriffeinheit 14 an der Abdeckplatte 2, beispielsweise über Halteelemente 17 und/oder über Einlegen von Kontaktflächen 16 in Aufnahmebereiche für Zellverbinder 3, angeordnet. Die Zellverbinder 3 werden danach zwischen den ersten und zweiten Halteflächen 4, 5 der Abdeckplatte 2 eingelegt. Die Abdeckplatte 2 wird sodann auf die Batteriezellen 1 aufgelegt und danach die Zellverbinder 3 über Montageöffnungen 11 mit den Polen 8 der Batteriezellen 1 verschweißt.

Die Erfindung gibt somit ein Batteriesystem an, dass bei kompakten Abmessungen einfach und sicher herzustellen ist

### Bezugszeichenliste

- 1: Batteriezelle
- 2: Abdeckplatte
- 3: Zellverbinder
- 4: erste Haltefläche
- 5: zweite Haltefläche
- 6: erster Fortsatz
- 7: zweiter Fortsatz
- 8: Pol
- 9: erste Reihe
- 10: zweite Reihe
- 11: Montageöffnung
- 12: Stirnseite
- 13: Einschuböffnung
- 14: Spannungsabgriffeinheit
- 15: Messleitung
- 16: Kontaktfläche
- 17: Halteelement
- 18: Scharnier

## Patentansprüche

1. Batteriesystem umfassend mehrere Batteriezellen (1), eine Abdeckplatte (2) zur Abdeckung der Batteriezellen (1), und Zellverbinder (3) zur elektrischen Verbindung der Batteriezellen (1), wobei die Zellverbinder (3) in Aufnahmebereichen der Abdeckplatte (2) angeordnet sind, wobei die Abdeckplatte (2) in den Aufnahmebereichen jeweils eine erste Haltefläche (4), als einen ersten flächigen Abschnitt der Abdeckplatte auf der den Batteriezellen (1) zugewandten ersten Seite der Abdeckplatte (2) ausbildet und eine zweite Haltefläche (5), als einen zweiten flächigen Abschnitt der Abdeckplatte auf der den Batteriezellen (1) abgewandten zweiten Seite der Abdeckplatte (2) ausbildet und die Zellverbinder (3) jeweils zwischen der ersten Haltefläche (4) und der zweiten Haltefläche (5) gehalten sind, wobei die ersten Halteflächen (4) durch jeweils einen ersten Fortsatz (6) und einen, dem ersten Fortsatz (6) gegenüberliegenden, zweiten Fortsatz (7) gebildet werden, sodass die Zellverbinder (3), auf der den Batteriezellen (1) zugewandten ersten Seite der Abdeckplatte (2), an Rändern der Zellverbinder von den ersten und zweiten Fortsätzen (6, 7) zu den Batteriezellen hin gehalten werden und in der Mitte der Zellverbinder mit Polen (8) der Batteriezellen (1) elektrisch verbindbar sind, wobei die ersten Fortsätze (6) kürzer als die zweiten Fortsätze (7) sind, **dadurch gekennzeichnet, dass** die Aufnahmebereiche in zumindest zwei Reihen (9, 10) nebeneinander angeordnet sind, wobei die ersten und zweiten Fortsätze (6, 7) in einer ersten Reihe (9) von Aufnahmebereichen spiegelverkehrt zu den ersten und zweiten Fortsätzen (6, 7) in einer der ersten Reihe (9) benachbarten zweiten Reihe (10) von Aufnahmebereichen angeordnet sind.

2. Batteriesystem nach Anspruch 1,
**dadurch gekennzeichnet, dass** die zweiten Halteflächen (5) jeweils eine Montageöffnung (11) aufweisen, so dass die Zellverbinder (3) durch die Montageöffnungen (11) von außen zugänglich sind.

3. Batteriesystem nach zumindest einem der vorhergehenden Ansprüche,
**dadurch gekennzeichnet, dass** die zweiten Halteflächen (5) jeweils über ein Scharnier (18) wegklappbar sind.

4. Batteriesystem nach zumindest einem der vorhergehenden Ansprüche,
**dadurch gekennzeichnet, dass** an einer Stirnseite (12) der Abdeckplatte (2) zumindest eine Einschuböffnung (13) zum seitlichen Einführen zumindest eines Zellverbinders (3) vorgesehen ist.

5. Batteriesystem nach Anspruch 4,
**dadurch gekennzeichnet, dass** zumindest eine Einschuböffnung (13) zum Einführen eines Zellverbinders (3) normal auf eine der Reihen (9, 10) von Aufnahmebereichen angeordnet ist und/oder dass zumindest eine Einschuböffnung (13) zum Einführen eines Zellverbinders (3) in Richtung einer Reihe (9, 10) von Aufnahmebereichen angeordnet ist.

6. Batteriesystem nach zumindest einem der vorhergehenden Ansprüche,
**dadurch gekennzeichnet, dass** zwischen benachbarten Aufnahmebereichen nichtleitende Trennelemente angeordnet sind.

7. Batteriesystem nach zumindest einem der vorhergehenden Ansprüche,
**dadurch gekennzeichnet, dass** das Batteriesystem eine Spannungsabgriffeinheit (14) mit Messleitungen (15) umfasst, wobei die Messleitungen (15) lösbar, insbesondere über Klemmverbindungen, mit den Zellverbindern (3) verbunden sind.

8. Batteriesystem nach Anspruch 7,
**dadurch gekennzeichnet, dass** die Enden der Messleitungen (15) Kontaktflächen (16) aufweisen und die Kontaktflächen (16) jeweils zwischen erster oder zweiter Haltefläche (4, 5) und Zellverbinder (3) geklemmt sind.

9. Batteriesystem nach Anspruch 7 oder 8,
**dadurch gekennzeichnet, dass** die Messleitungen (15) lösbar an der Abdeckplatte (2) festgelegt sind, insbesondere über an der Abdeckplatte (2) ausgebildete Halteelemente (17).

10. Verfahren zur Herstellung eines Batteriesystems nach zumindest einem der vorhergehenden Ansprüche,
**dadurch gekennzeichnet, dass** die Zellverbinder (3) zwischen den ersten und zweiten Halteflächen (4, 5) der Abdeckplatte (2) eingelegt werden, danach die Abdeckplatte (2) auf die Batteriezellen (1) aufgelegt wird und danach die Zellverbinder (3) mit Polen (8) der Batteriezellen (1) verschweißt werden.

11. Verfahren zur Herstellung eines Batteriesystems nach einem der Ansprüche 7 bis 9 durch ein Verfahren nach Anspruch 10,
**dadurch gekennzeichnet, dass** die Messleitungen (15) vor dem Einlegen der Zellverbinder (3) an der Abdeckplatte (2) festgelegt werden.

## Claims

1. Battery system comprising several battery cells (1), a covering plate (2) for covering the battery cells (1), and cell connectors (3) for electrically connecting battery cells (1), wherein the cell connectors (3) are arranged in receiving regions of the covering plate (2), wherein the covering plate (2) embodies in each case in the receiving regions a first holding surface (4) as a first planar section of the covering plate on the first face of the covering plate (2) that faces the battery cells (1) and embodies a second holding surface (5) as a second planar section of the covering plate on the second face of the covering plate (2) that is remote from the battery cells (1), and the cell connectors (3) are held in each case between the first holding surface (4) and the second holding surface (5), wherein the first holding surfaces (4) are formed by means of in each case a first extension (6) and a second extension (7) that lies opposite the first extension (6), so that the cell connectors (3) on the first face of the covering plate (2) that faces the battery cells (1) are connected to the battery cells on edges of the cell connectors by the first and second extensions (6, 7) and said cell connectors can be electrically connected in the centre of the cell connectors to poles (8) of the battery cells (1), wherein the first extensions (6) are shorter than the second extensions (7) **characterized in that** the receiving regions are arranged next to one another in at least two rows (9, 10), wherein the first and second extensions (6, 7) are arranged in a first row (9) of receiving regions in such a manner that mirrors the first and second extensions (6, 7) in a second row (10) of receiving regions that is adjacent to the first row (9).

2. Battery system according to Claim 1, **characterized in that** the second holding surfaces (5) comprise in each case an assembly opening (11) so that the cell connectors (3) are accessible from the exterior through the assembly openings (11).

3. Battery system according to at least one of the preceding claims, **characterized in that** the second holding surfaces (5) in each case can be folded away by way of a hinge (18).

4. Battery system according to at least one of the preceding claims, **characterized in that** at least one insertion opening (13) is provided on an end side (12) of the covering plate (2) for laterally inserting at least one cell connector (3).

5. Battery system according to Claim 4, **characterized in that** at least one insertion opening (13) for inserting a cell connector (3) is arranged perpendicular to one of the rows (9, 10) of receiving regions and/or that at least one insertion opening (13) for inserting a cell connector (3) is arranged in the direction of a row (9, 10) of receiving regions.

6. Battery system according to at least one of the preceding claims, **characterized in that** nonconductive separating elements are arranged between adjacent receiving regions.

7. Battery system according to at least one of the preceding claims **characterized in that** the battery system comprises a voltage tapping unit (14) having measuring lines (15), wherein the measuring lines (15) are connected to the cell connectors (3) in a detachable manner in particular by way of clamping connections.

8. Battery system according to Claim 7, **characterized in that** the ends of the measuring lines (15) comprise contact surfaces (16) and the contact surfaces (16) are clamped in each case between the first or second holding surface (4, 5) and cell connectors (3).

9. Battery system according to Claim 7 or 8, **characterized in that** the measuring lines (15) are fixed to the covering plate (2) in a detachable manner, in particular by way of holding elements (17) that are embodied on the covering plate (2).

10. Method for producing a battery system according to at least one of the preceding claims, **characterized in that** the cell connectors (3) are inserted between the first and second holding surfaces (4, 5) of the covering plate (2), subsequently the covering plate (2) is placed onto the battery cells (1) and subsequently the cell connectors (3) are welded to the poles (8) of the battery cells (1).

11. Method for producing a battery system according to any one of the Claims 7 to 9 by means of a method according to Claim 10, **characterized in that** the measuring lines (15) are fixed to the covering plate (2) prior to the cell connectors (3) being inserted.

## Revendications

1. Système de batterie comprenant plusieurs cellules de batterie (1), une plaque de recouvrement (2) permettant de recouvrir les cellules de batterie (1) et des connecteurs de cellule (3) permettant de connecter sur le plan électrique les cellules de batterie (1), les connecteurs de cellule (3) étant disposés dans des zones de logement de la plaque de recouvrement (2), la plaque de recouvrement (2) formant respectivement dans les zones de logement une première surface d'arrêt (4), prenant la forme d'une première section plane de la plaque de recouvrement sur le premier côté (2) de la plaque de recouvrement orienté vers les cellules de batterie (1) et une deuxième surface d'arrêt (5) prenant la forme d'une deuxième section plane de la plaque de recouvrement sur le deuxième côté de la plaque de recouvrement (2) opposé aux cellules de batterie (1) et les connecteurs de cellule (3) étant respectivement maintenus entre la première surface d'arrêt (4) et la deuxième surface d'arrêt (5), les premières surfaces d'arrêt (4) étant respectivement formées par un premier prolongement (6) et un deuxième prolongement (7) opposé au premier prolongement (6), de sorte que les connecteurs de cellule (3) soient maintenus sur le premier côté de la plaque de recouvrement (2) orienté vers les cellules de batterie (1), au niveau des bords des connecteurs de cellule, depuis les premier et deuxième prolongements (6, 7) vers les cellules de batterie et puissent être reliés sur le plan électrique aux pôles (8) des cellules de batterie (1) au centre des connecteurs de cellule, les premiers prolongements (6) étant plus courts que les deuxièmes prolongements (7), **caractérisé en ce que** les zones de logement sont disposées côte à côte dans au moins deux rangées (9, 10), les premier et deuxième prolongements (6, 7) étant inversés en miroir dans une première rangée (9) des zones de logement par rapport aux premier et deuxième prolongements (6, 7) disposés dans une deuxième rangée (10), connexe à la première rangée (9), des zones de logement.

2. Système de batterie selon la revendication 1, **caractérisé en ce que** les deuxièmes surfaces d'arrêt (5) comportent respectivement une ouverture de montage (11), de sorte que les connecteurs de cellule (3) sont accessibles de l'ouverture par le biais des ouvertures de montage (11).

3. Système de batterie selon au moins l'une quelconque des revendications précédentes, **caractérisé en ce que** les deuxièmes surfaces d'arrêt (5) peuvent respectivement être écartées par rabattement par le biais d'une charnière (18).

4. Système de batterie selon au moins l'une quelconque des revendications précédentes, **caractérisé en ce qu'**au moins une ouverture d'embrochage (13) est prévue au niveau d'un côté avant (12) de la plaque de recouvrement (2) pour l'introduction latérale d'au moins un connecteur de cellule (3).

5. Système de batterie selon la revendication 4, **caractérisé en ce qu'**au moins une ouverture d'embrochage (13) est disposée perpendiculairement sur une des rangées (9, 10) des zones de logement pour l'introduction d'un connecteur de cellule (3) et/ou qu'au moins une ouverture d'embrochage (13) est disposée en direction d'une rangée (9, 10) de zones de logement pour l'introduction d'un connecteur de cellule (3).

6. Système de batterie selon au moins l'une quelconque des revendications précédentes, **caractérisé en ce que** des éléments de séparation non conducteurs sont disposés entre les zones de logement connexes.

7. Système de batterie selon au moins l'une quelconque des revendications précédentes, **caractérisé en ce que** le système de batterie comporte une unité de prise de tension (14) avec des câbles de mesure (15), les câbles de mesure (15) étant reliés de façon amovible aux connecteurs de cellule (3), notamment via des assemblages coincés.

8. Système de batterie selon la revendication 7, **caractérisé en ce que** les extrémités des câbles de mesure (15) comportent des surfaces de contact (16) et que les surfaces de contact (16) sont respectivement coincées entre la première ou deuxième surface d'arrêt (4, 5) et les connecteurs de cellule (3).

9. Système de batterie selon la revendication 7 ou 8, **caractérisé en ce que** les câbles de mesure (15) sont fixés de façon amovible à la plaque de recouvrement (2), notamment via les éléments d'arrêt (17) réalisés au niveau de la plaque de recouvrement (2).

10. Procédé de fabrication d'un système de batterie selon au moins l'une quelconque des revendications précédentes, **caractérisé en ce que** les connecteurs de cellule (3) sont insérés entre les première et deuxième surfaces d'arrêt (4, 5) de la plaque de recouvrement (2), puis que la plaque de recouvrement (2) est placée sur les cellules de batterie (1) puis que les connecteurs de cellule (3) sont soudés aux pôles (8) des cellules de batterie (1).

11. Procédé de fabrication d'un système de batterie selon l'une quelconque des revendications 7 à 9 par le biais d'un procédé selon la revendication 10, **caractérisé en ce que** les câbles de mesure (15) sont fixés à la plaque de recouvrement (2) avant l'introduction des connecteurs de cellule (3).
